(19) **Europäisches Patentamt**
**European Patent Office**
**Office européen des brevets**

(11) **EP 3 416 007 B1**

(12) **EUROPEAN PATENT SPECIFICATION**

(45) Date of publication and mention
of the grant of the patent:
**10.07.2024 Bulletin 2024/28**

(51) International Patent Classification (IPC):
**G05B 19/401** (2006.01)   **B25J 9/16** (2006.01)
**B25J 13/08** (2006.01)

(21) Application number: **18156627.4**

(22) Date of filing: **14.02.2018**

(52) Cooperative Patent Classification (CPC):
**B25J 9/1697; G05B 19/401;** G05B 2219/35408;
G05B 2219/39391

(54) **CONTROL DEVICE, POSITION CONTROL SYSTEM, POSITION CONTROL METHOD, AND POSITION CONTROL PROGRAM**

STEUERUNGSVORRICHTUNG, POSITIONSSTEUERUNGSSYSTEM, POSITIONSSTEUERUNGSVERFAHREN UND POSITIONSSTEUERUNGSPROGRAMM

DISPOSITIF DE COMMANDE, SYSTÈME DE COMMANDE DE POSITION, PROCÉDÉ DE COMMANDE DE POSITION ET PROGRAMME DE COMMANDE DE POSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2017 JP 2017117319**

(43) Date of publication of application:
**19.12.2018 Bulletin 2018/51**

(73) Proprietor: **OMRON CORPORATION**
**Kyoto-shi, Kyoto 600-8530 (JP)**

(72) Inventors:
• **NAMIE, Masaki**
**KYOTO, 600-8530 (JP)**
• **FUJII, Takashi**
**KYOTO, 600-8530 (JP)**
• **HASHIMOTO, Naoya**
**KYOTO, 600-8530 (JP)**

(74) Representative: **2K Patentanwälte Blasberg Kewitz & Reichel**
**Partnerschaft mbB**
**Schumannstrasse 27**
**60325 Frankfurt am Main (DE)**

(56) References cited:
**US-A- 5 946 449**        **US-A1- 2016 318 187**
**US-A1- 2017 136 626**

• **HASHIMOTO K ET AL: "Manipulator control with image-based visual servo", PROCEEDINGS OF THE INTERNATIONAL CONFERENCE ON ROBOTICS AND AUTOMATION SACRAMENTO, APR. 9 - 11, 19; [PROCEEDINGS OF THE INTERNATIONAL CONFERENCE ON ROBOTICS AND AUTOMATION], LOS ALAMITOS, IEEE COMP. SOC. PRESS, US, vol. CONF. 7, 9 April 1991 (1991-04-09), pages 2267 - 2271, XP010024085, ISBN: 978-0-8186-2163-5, DOI: 10.1109/ROBOT.1991.131968**

• **MIDORIKAWA H ET AL: "A proposal of sensor fusion in cooperative system", ADVANCED MOTION CONTROL, 2004 8TH IEEE INTERNATIONAL WORKSHOP ON. AMC KAWASAKI, JAPAN MARCH 25-28, 2004, PISCATAWAY, NJ, USA,IEEE, 25 March 2004 (2004-03-25), pages 487 - 492, XP010705663, ISBN: 978-0-7803-8300-5, DOI: 10.1109/AMC.2004.1297917**

## Description

## BACKGROUND

Technical Field

The present disclosure relates to a technique for position control using a servo motor and an image sensor.

Description of Related Art

In factory automation (FA), various techniques (positioning techniques) for aligning a predetermined position (control object position) of a workpiece or the like at a target position by using a servo motor has been put into practical use.
At this time, there are a method using encoder values of the servo motor, a method using image processing by an image sensor, and the like as methods of measuring a difference (distance) between the control object position and the target position.
In the method using the encoder values, a moving distance of the control object position is calculated by sequentially adding the encoder values that are obtained at a predetermined cycle.
In the method using the image processing, the distance between the control object position and the target position is calculated (measured) by capturing an image including the control object position and the target position and analyzing the captured image.
In the method of performing image processing, a fact that a delay may occur due to the time related to the image processing or the like which may affect the accuracy of position control has been recognized. Therefore, the distance measured by the image processing is corrected by using a Kalman filter according to Japanese Patent Application Laid-open No. 2015-213139 (Patent Document 1).
In US 59 46 449 (A) an apparatus which allows one to maintain precision placement of a manipulator which undergoes repeated controlled motions or trajectories is provided. The structure of the apparatus is compliant such that the manipulator may be displaced by forces applied to the mechanical structure. This compliance is due to a lack of precision in the fabrication of the component parts of the machine, and to a lack of rigidity due to a lightweight design. This displacement is of a greater magnitude than the precision positioning tolerance of the apparatus. Consequently, the manipulator may then be displaced outside of the positioning tolerance due to applied forces. However, despite the compliance of the mechanical structure of the apparatus, the positioning tolerance will be maintained. The controlled motion is accomplished by the generation of control signals by computer software running on a computer control system. The control software enables the system to run at much greater speeds while not exciting unwanted movement or vibration in the compliant mechanical structure. (Patent Document 2)
In US2016318187 (A1) a robot system and method are provided that move an articulable arm relative to a target object. Perception information corresponding to a position of the arm relative to the target object is acquired at an acquisition rate. Movement of the arm is controlled at a control rate that is at least one of faster than or unsynchronized with the acquisition rate. Predicted position information representative of a predicted positioning of the arm is provided using the perception information. The arm is controlled using the perception information and the predicted position information.
The academic publication titled "A proposal of sensor fusion in cooperative system" by Midorikawa H. and Ohnishi K. discloses a method for compensating the image feedback used for controlling a robot by visual servo, wherein the compensation value is related to dead reckoning of the mobile robot position as received by the robot encoders.

## SUMMARY

However, a model for the delay has to be set in the Kalman filter according to the method described in Patent Document 1. Therefore, a high technical level is needed to perform highly accurate correction, and it is not easy to perform highly accurate correction. In addition, highly accurate correction cannot be performed unless an initial value is suitably set, and if highly accurate correction is performed, it takes time until the corrected distance is stably output. Therefore, this is not suitable for FA that requires high-speed and highly accurate control.
In addition, it is possible to perform high-speed positioning control in a case in which the distance is determined using only an encoder value. However, by effectively taking advantage of a distance measured by image processing it is expected that there would be further improvement in positioning accuracy.
Therefore, an object of the present disclosure is to realize high-speed and highly accurate positioning control using a simple configuration and processing.
A control device according to the present disclosure includes a position determination unit and a feedback control unit. The position determination unit repeatedly acquires position-related data related to a control object from a drive device that moves the control object. The position determination unit acquires measurement data obtained by measuring a positional relationship between the control object and a target position by image processing, at a time interval that is longer than an acquisition interval of the position-related data. The position determination unit determines an estimated position corresponding to a control object position by using the position-related data and the measurement data. The feedback control unit outputs control data for aligning the control object at the target position to the drive device by using the estimated position determined by the position determination unit.

In this configuration, the position determination unit estimates the position-related data at an imaging time of an image used in the image processing. The position determination unit determines the estimated position by using the position-related data at the imaging time, the measurement data, and the position-related data at the same time as the time of the measurement data.

With this configuration, the control object position at a current time is corrected by using the estimated position-related data at the imaging time.

In addition, the position determination unit determines the estimated position by subtracting the estimated position-related data at the imaging time from a sum value of the measurement data and the position-related data at the same time in the control device.

With this configuration, a specific example of the aforementioned correction computation is illustrated. In this manner, the estimated position is calculated by simple computation.

In addition, the position determination unit estimates the position-related data at the imaging time by an interpolation value of position-related data at a plurality of times close to the imaging time in the control device.

With this configuration, a specific example of the aforementioned correction computation is illustrated. In this manner, the estimated position is calculated by simpler computation.

In addition, the position determination unit calculates the interpolation value by using a delay time related to the imaging and a delay time related to transmission of the position-related data in the control device.

With this configuration, a more specific example of the aforementioned correction computation is illustrated. In this manner, the control object position is accurately calculated by simpler computation.

According to the present disclosure, high-speed and highly accurate positioning control can be realized using a simple configuration and processing.

## BRIEF DESCRIPTION OF THE DRAWINGS

FIG. 1 is a functional block diagram illustrating a configuration of a position control system according to a first embodiment of the present disclosure.

FIG. 2(A) and FIG. 2(B) are appearance perspective views illustrating an application example of the position control system according to the first embodiment of the present disclosure.

FIG. 3 is a flowchart illustrating processing performed by a control device of the position control system according to the first embodiment of the present disclosure.

FIG. 4(A) is a graph illustrating temporal change in an encoder value PVm and a measurement position PVv, and FIG. 4(B) is a graph illustrating temporal change in an estimation interpolation position PV.

FIG. 5 is a flowchart illustrating a method of estimating and calculating an encoder value at an imaging time.

FIG. 6 is a diagram illustrating a concept of calculating an encoder value at the imaging time.

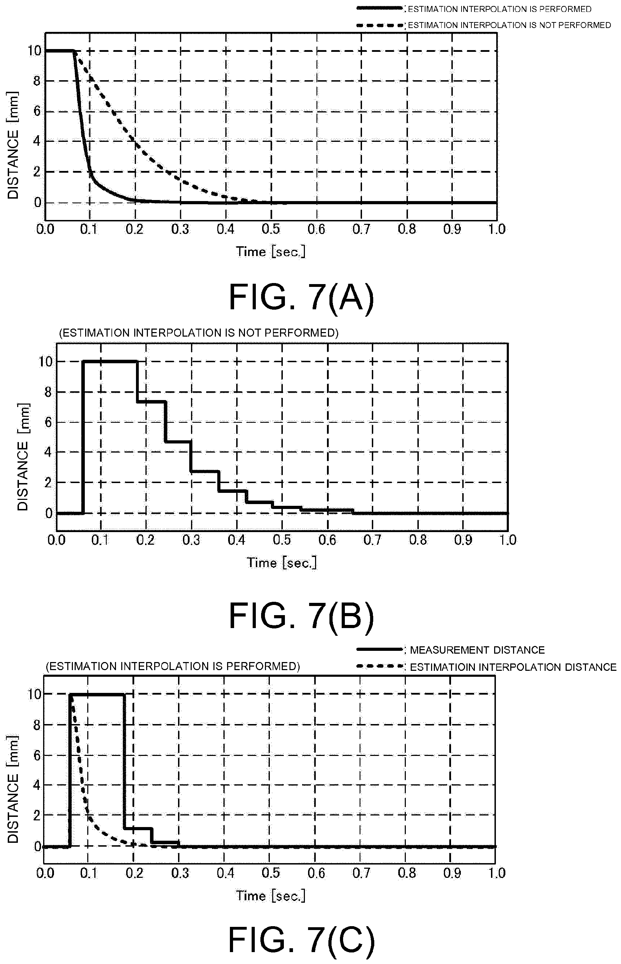

FIG. 7(A) is a diagram illustrating temporal change in distances between a target position and a control object position in a case in which estimation interpolation is performed (a configuration of the present application) and in a case in which estimation interpolation is not performed (a comparative configuration), FIG. 7(B) is a diagram illustrating temporal change in a measured distance in a case in which estimation interpolation is not performed, and FIG. 7(C) is a diagram illustrating temporal change in a measured distance and an estimation interpolation distance (the distance between the target position and the control object position) in a case in which estimation interpolation is performed.

FIG. 8 is a functional block diagram illustrating a configuration of a position control system according to a second embodiment of the present disclosure.

## DESCRIPTION OF THE EMBODIMENTS

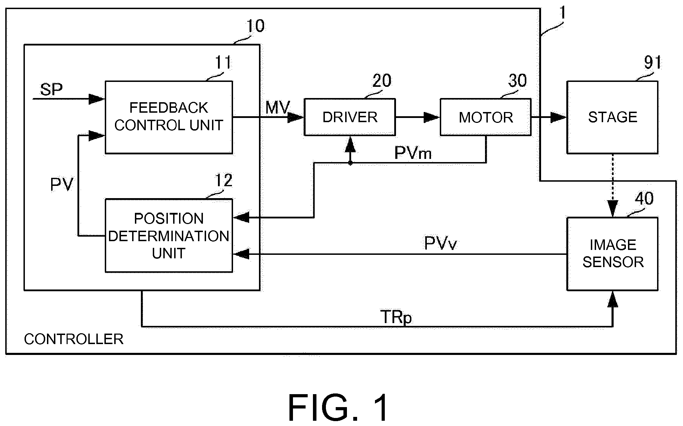

A positioning control technique according to a first embodiment of the present disclosure will be described with reference to drawings. FIG. 1 is a functional block diagram illustrating a configuration of a position control system according to the first embodiment of the present disclosure. Note that the solid line arrow represents that components are connected by a signal line or the like and the dotted line arrow represents a configuration in which information of an object is acquired in a non-contact manner in FIG. 1.

As illustrated in FIG. 1, the position control system 1 includes a controller 10, a driver 20, a motor 30, and an image sensor 40.

The controller 10 is a so-called programmable logic controller (PLC), for example, and performs various kinds of FA control. The controller 10 includes a feedback control unit 11 and a position determination unit 12.

The feedback control unit 11 executes computation such as proportional-integral-derivative (PID) control such that a target position SP and an estimation interpolation position PV coincide with each other by using the target position SP and the estimation interpolation position corresponding to a control object position (corresponding to the "estimated position" of the present disclosure). The feedback control unit 11 calculates an operation amount MV by performing this computation. The feedback control unit 11 outputs the operation amount MV to the driver 20.

The position determination unit 12 calculates the estimation interpolation position PV corresponding to the control object position by using an encoder value PVm from the driver 20 and a measurement position PVv from the image sensor 40, although detailed processing will be described later. The position determination unit 12 outputs the estimation interpolation position PV to the feedback control unit 11.

The feedback control is repeatedly executed at a control cycle Tc. That is, the feedback control unit 11 outputs the operation amount MV at every control cycle Tc. Note that the operation amount MV is any of a command position, a command speed, and a command torque for the driver 20.

The driver 20 performs operation control for the motor 30 by using the operation amount MV. In addition, the driver 20 acquires the encoder value PVm from the motor 30 and outputs the encoder value PVm to the position determination unit 12. At this time, the driver 20 outputs the encoder value PVm to the position determination unit 12 at the same cycle as the control cycle Tc.

The motor 30 is a servo motor, for example, and operates in response to operation control by the driver 20. A stage 91 moves and the control object position is moved by operations of the motor 30.

The driver 20 and the motor 30 are provided to correspond to the number of moving directions of the control object position, that is, the number of movable axes of the position control.

The image sensor 40 images the stage 91, more specifically, a region including the control object position and the target position SP on the stage 91. At this time, the image sensor 40 captures the image in response to an imaging trigger TRp from the controller 10. The controller 10 outputs the imaging trigger TRp at a time interval that is longer than the control cycle Tc. That is, the image sensor 40 captures an image at a time interval that is longer than the control cycle Tc.

The image sensor 40 calculates the measurement position PVv of the control object position with respect to the target position SP (a measurement distance between the target position SP and the control object position) by performing image processing on the captured image. The image sensor 40 outputs the measurement position PVv to the position determination unit 12.

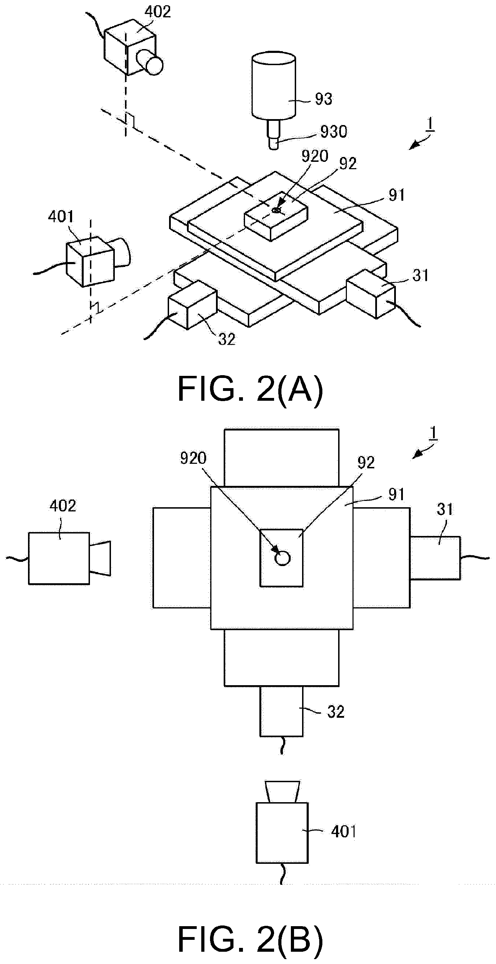

Such a position control system 1 is applied to automation of an operation as illustrated in FIG. 2(A) and FIG. 2(B), for example. FIG. 2(A) is an appearance perspective view illustrating an application example of the position control system according to the first embodiment of the present disclosure, and FIG. 2(B) is a plan view illustrating an application example of the position control system according to the first embodiment of the present disclosure. In FIG. 2(B), illustration of a screw clamping machine is omitted.

As illustrated in FIGS. 2(A) and 2(B), a screw hole 920 is provided in a workpiece 92. The workpiece 92 is attached to a top surface of the stage 91. The stage 91 is a so-called XY table and is movable about two orthogonal axes that are parallel to the top surface. A drive shaft of the motor 31 is fixed to one of two movable tables that are included in the stage 91, and a drive shaft of the motor 32 is fixed to the other. In this manner, the stage 91 is moved in directions of the two orthogonal axes by driving the motor 31 and the motor 32. Therefore, the position of the screw hole 920 becomes the control object position.

A screw clamping machine 93 is arranged above the stage 91. The screw 930 is attached to a lower end of the screw clamping machine 93. The screw clamping machine 93 is moved in an up-down direction by a drive unit, illustration of which is omitted. Therefore, the screw clamping machine 93 is lowered, and a position at which it is brought into contact with the stage 91 becomes the target position SP.

A camera 401 and a camera 402 are arranged in an outer circumference of the stage 91. The camera 401 and the camera 402 are a part of components of the image sensor 40. The camera 401 and the camera 402 are arranged such that a tip end of the screw 930 and the screw hole 920 are within an imaging range. That is, the camera 401 and the camera 402 are arranged such that the control object position and the target position SP are within the imaging range. The camera 401 is a sensor that mainly images movement of the position of the screw hole 920 due to driving of the motor 31, and the camera 402 is a sensor that mainly images movement of the position of the screw hole 920 due to driving of the motor 32. In order to realize this, it is only necessary that an imaging axis of the camera 401 is orthogonal to a direction in which the stage 91 is moved by the motor 31, and that an imaging axis of the camera 402 is orthogonal to a direction in which the stage 91 is moved by the motor 32 as illustrated in FIG. 2(B), for example. Note that these orthogonal relationships may include errors.

The camera 401 and the camera 402 output captured images to an image processing unit. The image processing unit is a part of the components of the image sensor 40. The image processing unit calculates the measurement position PV corresponding to the distance between the tip end of the screw 930 and the screw hole 920, that is, the aforementioned distance between the control object position and the target position SP by performing image analysis.

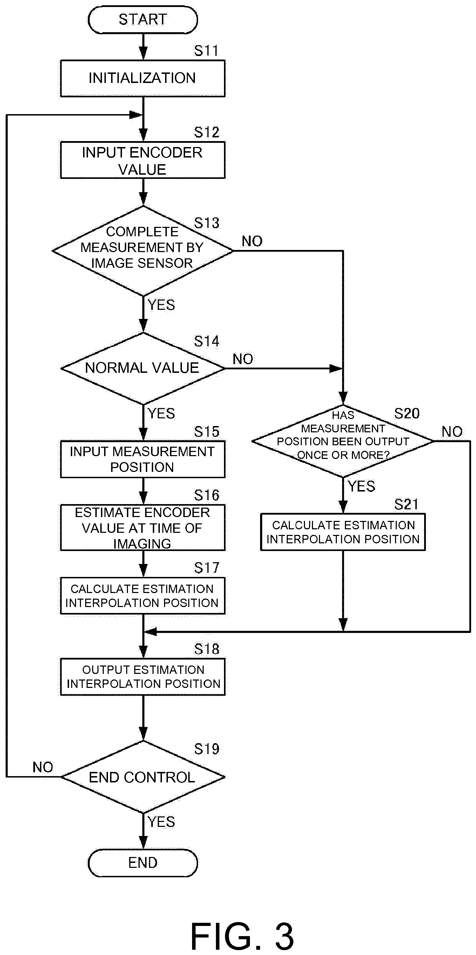

In the position control system 1 with such a configuration, the position determination unit 12 of the controller 10 calculates the estimation interpolation position PV by performing the processing as illustrated in the flowchart in FIG. 3. FIG. 3 is a flowchart illustrating processing performed by the control device of the position control system according to the first embodiment of the present disclosure.

The position determination unit 12 initializes the estimation interpolation position PV and the encoder value PVm (S11).

When an output of the encoder value PVm from the driver 20 is started, the position determination unit 12 sequentially receives an input of the encoder value PVm (S12).

The position determination unit 12 detects whether or not the measurement position PVv has been obtained from the image sensor 40 (S13). If it is a time until which the measurement position PVv has been obtained (S13: YES), the position determination unit 12 detects whether or not the measurement position PVv is a normal value. If the measurement position PVv is a normal value (S14: YES), the position determination unit 12 accepts an input of the measurement position PVv (S15).

If the input of the measurement position PVv is accepted, the position determination unit 12 estimates an encoder value PVms at an imaging time, on the basis of which the measurement position PVv is calculated (S16). A specific estimation method will be described later. Note that in a case in which an exposure time of the cameras 401 and 402 is long, the imaging time is set using an intermediate time between an exposure start time (a time at which shutters of the cameras are opened) and an exposure end time (a time at which the shutters of the cameras are closed).

The position determination unit 12 calculates the estimation interpolation position PV by using the measurement position PVv and the encoder value PVm at the same time and the encoder value PVms at the imaging time, on the basis of which the measurement position PVv is calculated (S17). Specifically, the position determination unit 12 calculates the estimation interpolation position PV by using the following (Equation 1) in Step S17.

$$PV = PVv + (PVm - PVms) \qquad \text{(Equation 1)}$$

If the position determination unit 12 calculates the estimation interpolation position PV, then the position determination unit 12 outputs the estimation interpolation position PV to the feedback control unit 11 (S18). In addition, the position determination unit 12 updates and stores the estimation interpolation position PV as a reference estimation interpolation position PVp and the encoder value PVm at the time as a reference encoder value PVmp.

If it is a time until which the measurement position PVv has not been obtained from the image sensor 40 (S13: NO), the position determination unit 12 detects whether or not the measurement position PVv has been output once or more (S20). In addition, if the measurement position PVv is not a normal value (S14, NO), the position determination unit 12 similarly detects whether or not the measurement position PVv has been output once or more (S20).

If the measurement position PVv has been output once or more (S20: YES), the position determination unit 12 calculates the estimation interpolation position PV by using the encoder value PVm, the reference estimation interpolation position PVp, and the reference encoder value PVmp (S21). Specifically, the position determination unit 12 calculates the estimation interpolation position PV by using the following (Equation 2) in Step S21.

$$PV = PVp + PVm - PVmp \qquad \text{(Equation 2)}$$

If the measurement position PVv has not been output even once (S20: NO), the position determination unit 12 maintains the estimation interpolation position PV as an initial value.

Every time the encoder value PVm is input, the position determination unit 12 executes the aforementioned processing, and if the control is not to be ended, (S19: NO), the position determination unit 12 returns to Step S12 (the acception of the input of a new encoder value PVm) and continues the processing. If the control is to be ended (S19: YES), the position determination unit 12 ends the processing.

By executing such processing, the controller 10 can calculate the estimation interpolation position PV by using the highly accurate measurement position PVv at the time at which the highly accurate measurement position PVv obtained by the image processing is input, and can realize highly accurate positioning control. Here, the measurement position PVv is input at a long time interval. However, the controller 10 calculates the estimation interpolation position PV and performs position control at every input time of the encoder value PVm that is input at a short cycle between times at which measurement positions PVv that are adjacent on a time axis are input. In this manner, highly accurate and short-cycle positioning control can be performed. In addition, since the controller 10 performs processing using the aforementioned basic arithmetic operations at this time, it is possible to realize high-speed and highly accurate positioning control using a simple configuration and processing.

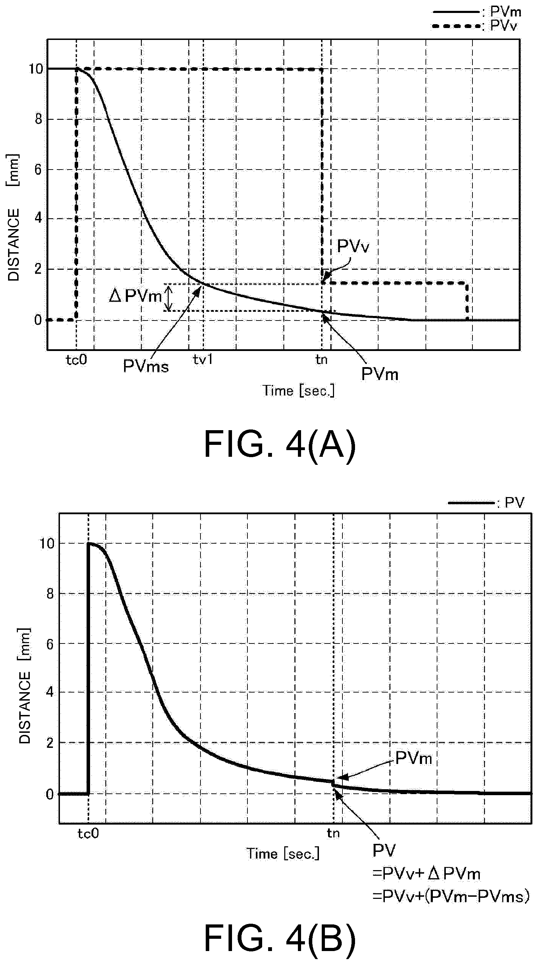

At this time, the controller 10 performs the aforementioned processing, thereby calculating the estimation interpolation position as illustrated in FIG. 4(A). Therefore, the controller 10 can highly accurately calculate the estimation interpolation position PV by using the measurement position PVv obtained by the image processing. FIG. 4(A) is a graph illustrating temporal change in the encoder value PVm and the measurement position PVv, and FIG. 4(B) is a graph illustrating temporal change in the estimation interpolation position PV.

As illustrated in FIG. 4(A), the calculation of the measurement distance corresponding to the measurement position PVv is updated at a long cycle since time for image capturing and image processing by the image sensor 40 is needed. Therefore, even if the measurement position PVv is obtained at the time tn at which the estimation interpolation position PV is calculated, the measurement position PVv is obtained from the image captured at an imaging time tv1 in the past before the calculation time tn, and the measurement position PVv is a result of highly accurately calculating the control object position at the imaging time tv1, where the time tc0 is control start time.

A time (tn - tv1) has elapsed from the calculation time tn to the imaging time tv1, and the control object position has moved. Therefore, correction has to be performed by the amount of the movement of the control object position.

Here, the encoder value PVm is updated at a shorter cycle than the cycle at which the measurement position PVv is calculated since the control cycle of the motor 30 is short. By using this, the position determination unit 12 of the controller 10 performs the computation represented by (Equation 1). Specifically, the position determination unit 12 acquires the encoder value PVms at the imaging time tv1 and the encoder value PVm at the calculation time tn. The position determination unit 12 calculates the estimation interpolation position PV at the time tn at which the calculation is performed by adding an amount of change $\Delta$PVm (PVm - PVms) of the encoder value PVm corresponding to the time (tn - tv1) to the measurement position PVv. Although the estimation interpolation position PV becomes discontinuous at the calculation time tn at this time, it is more preferable to use smoothing processing (for example, movement averaging processing) on the estimation interpolation position PV in this case since it is possible to smooth the temporal change in the estimation interpolation position PV.

The estimation interpolation position PV highly accurately reflects the control object position at the calculation time tn by using the processing. Therefore, it is possible to perform highly accurate positioning control.

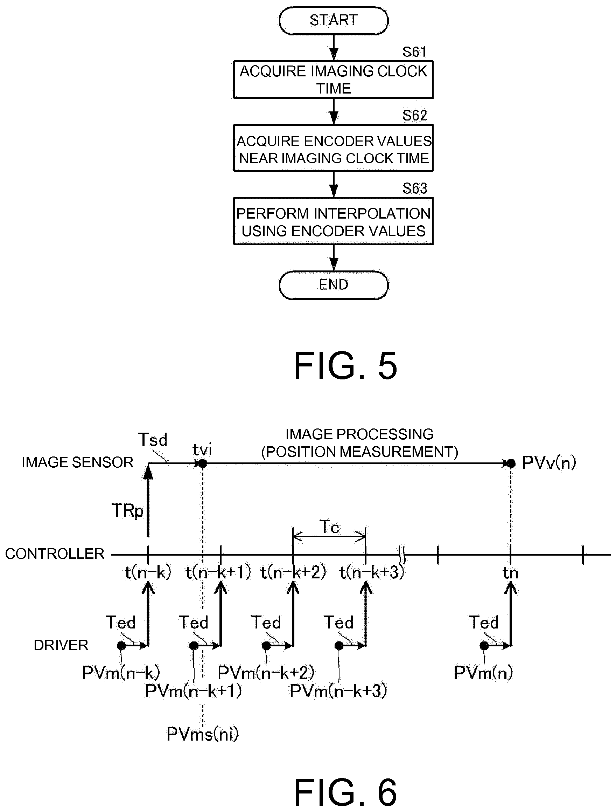

Further, the position determination unit 12 of the controller 10 calculates the encoder value PVms at the imaging time by using the processing described below. FIG. 5 is a flowchart illustrating a method of estimating and calculating the encoder value at the imaging time. FIG. 6 is a diagram illustrating a concept of calculating the encoder value at the imaging time.

As illustrated in FIG. 5, the position determination unit 12 acquires the imaging time (S61). The position determination unit 12 acquires encoder values PVm at a plurality of times close to the imaging time (S62). The position determination unit 12 calculates an interpolated value of the encoder values PVm at the plurality of times as the encoder value PVms at the imaging time (S63). Note that in a case in which the imaging time coincides with the time at which the encoder value is calculated, the encoder value may be used without any change.

Specifically, the position determination unit 12 calculates the encoder value PVms at the imaging time by using the concept illustrated in FIG. 6. The calculation time t is repeated at a cycle Tc, and the cycle Tc corresponds to the control cycle of the controller 10.

The position determination unit 12 acquires an encoder value PVm(n) at the time tn at which the measurement position PVv is obtained and the estimation interpolation position Pv is calculated. The position determination unit 12 acquires an imaging time tvi in the past before the calculation time tn. The position determination unit 12 detects two times in the vicinity of the imaging time tv1, for example, a calculation time t(n - k) in the past and a calculation time ten - k + 1) in the past with the imaging time tvi interposed therebetween on the time axis, for example.

The position determination unit 12 acquires an encoder value PVm(n - k) at the calculation time t(n - k) and an encoder value PVm(n - k + 1) at the calculation time t(n - k +1). The encoder values in the past can be stored by providing a storage unit in the controller 10.

The position determination unit 12 calculates an encoder value PVms(ni) at the imaging time tvi by using the interpolation value of the encoder value PVm(n - k) and the encoder value PVm(n - k + 1).

Specifically, the position determination unit 12 calculates the encoder value PVms(ni) at the imaging time tvi by using the following (Equation 3).

$$PVms(ni) = PVm(n - k) + Kk * (PVm(n - k + 2) - PVm(n - k + 1)) \qquad \text{(Equation 3)}$$

Here, Kk is an interpolation coefficient. In a case in which Tc - Ted $\leq$ Tsd < 2Tc - Ted where Tc represents the control cycle, Ted represents a transmission delay time of the encoder value PVm, and Tsd represents a transmission delay time of the imaging trigger TRp, the interpolation coefficient Kk is calculated by using the following (Equation 4).

$$Kk = \{Tsd - (Tc - Ted)\}/Tc \qquad \text{(Equation 4)}$$

By using such a method of calculating the interpolation value, it is possible to highly accurately calculate the encoder value PVms(ni) at the imaging time tvi. In this manner, it is possible to calculate a more highly accurate estimation interpolation position PV and more highly accurate positioning control becomes possible.

FIG. 7(A) is a diagram illustrating temporal change in distance between the target position and the control object position in a case in which estimation interpolation is performed (the configuration of the present application) and in a case in which estimation interpolation is not performed (a comparative configuration). FIG. 7(B) is a diagram illustrating temporal change in the measurement distance in a case in which estimation interpolation is not performed. FIG. 7(C) is a diagram illustrating temporal change in the measurement distance and the estimation interpolated distance (the distance between the target position and the control object position) in a case in which estimation interpolation is performed.

As illustrated in FIG. 7(A), it is possible to increase the speed of the distance position control between the target position and the control object position by performing the estimation interpolating as illustrated in FIG. 7(A). In addition, the measurement distances (corresponding to the measurement position PVv) also converge at a high speed by performing the estimation interpolating control as illustrated in FIGs. 7(B) and 7(C), and it is possible to perform high-speed and highly accurate position control of the target position. This is because of the following reason. Since the measurement position PVv is updated at a long cycle and is position information including a delay, overshooting or vibration tends to occur, and it is not possible to significantly strengthen a gain of feedback control. Meanwhile, it becomes possible to strengthen the gain of the feedback control by using the estimation interpolation position PV.

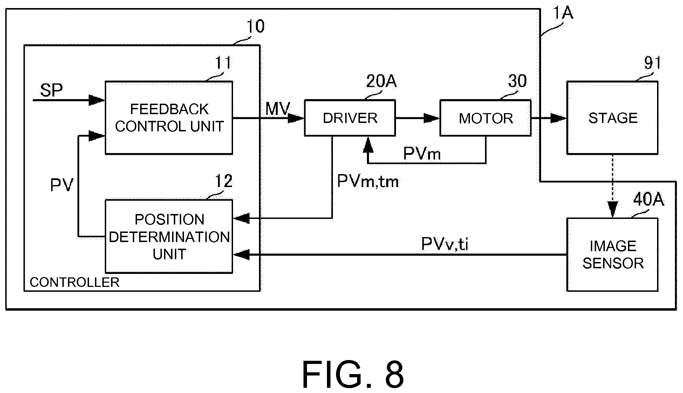

Next, a position control technique according to a second embodiment of the present disclosure will be described with reference to a drawing. FIG. 8 is a functional block diagram illustrating a configuration of a position control system according to the second embodiment of the present disclosure.

As illustrated in FIG. 8, a position control system 1A according to the second embodiment is different from the position control system 1 according to the first embodiment in processing performed by a driver 20A and an image sensor 40A. Since other processing performed by the position control system 1A is similar to that of the position control system 1, description of similar portions will be omitted.

The controller 10, the driver 20A, and the image sensor 40A have synchronized time measurement functions.

The driver 20A outputs the encoder value PVm to the position determination unit 12 at an independently determined cycle. At this time, the driver 20A associates and outputs each encoder value PVm with an acquired time tm.

The image sensor 40A captures an image at an independent time interval and outputs the measurement position PVv and the imaging time ti to the position determination unit 12.

The position determination unit 12 calculates the estimation interpolation position PV by performing processing similar to that in the aforementioned first embodiment by using the time tm at which the encoder value is acquired and the imaging time ti.

Also if such a configuration and processing are employed, it is possible to realize high-speed and highly accurate positioning control using a simple configuration and processing in a manner similar to that in the first embodiment.

[Reference Signs List]

1, 1A Position control system
10 Controller
11 Feedback control unit
12 Position determination unit
20, 20A Driver
30, 31, 32 Motor
40, 40A Image sensor
91 Stage
92 Workpiece
93 Screw clamping machine
401, 402 Camera
920 Screw hole
930 Screw

**Claims**

1. A control device (10) comprising:
   a position determination unit (12) that is configured to:

   repeatedly acquire position related data related to a control object from a drive device, which is configured to move the control object, by using an encoder,
   acquire measurement data obtained at a calculation time by measuring a positional relationship between the control object and a target position by image processing from an image captured at an imaging time before the calculation time, at a time interval that is longer than an acquisition interval of the position-related data, and to determine an estimated position of the control object by using the position-related data and the measurement data; and
   a feedback control unit (11) that is configured to control data for aligning the control object at the target position to the drive device by using the estimated position determined by the position determination unit (12),
   **characterized in that**, the position determination unit (12) is configured to estimate the position-related data at the imaging time of the image used in the image processing, and to determine the estimated position at the calculation time by adding a difference between the position-related data at the calculation time and the position-related data at the imaging time to the measurement data.

2. The control device (10) according to claim 1, wherein the position determination unit (12) is configured to estimate the position-related data at the imaging time using an interpolation value of the position-related data at a plurality of times close to the imaging time.

3. The control device (10) according to claim 2, wherein the position determination unit (12) is configured to calculate the interpolation value by using a delay time related to the imaging and a delay time related to transmission of the position-related data.

4. The control device (10) according to claim 3,

   wherein the position-related data is acquired at a constant cycle, and
   the position determination unit (12) is configured to calculate the interpolation value by using the cycle.

5. A position control system (1, 1A) comprising:

   the control device (10) according to any one of claims 1 to 4;
   the drive device (20, 20A); and
   an image sensor (40, 40A) configured to perform the image processing.

6. A position control method comprising:

   a process (S12) of repeatedly acquiring position-related data related to a control object from a drive device that moves the control object, by using an encoder,;
   a process (S13) of acquiring measurement data obtained at a calculation time by measuring a positional relationship between the control object and a target position by image processing from an image captured at an imaging time before the calculation time, at an interval that is longer than an acquisition interval of the position-related data;
   a position determining process (S16) of determining an estimated position of the control object by using the position-related data and the measurement data; and
   a feedback control process (S18) of outputting control data for aligning the control object at the target position by using the estimated position determined in the position determining process to the drive device, **characterized by**,
   in the position determining process (S16),
   the position-related data at the imaging time of the image used in the image processing is estimated, and
   the estimated position at the calculation time is determined by adding a difference between the position-related data at the calculation time and the position-related data at the imaging time to the measurement data.

7. A non-transitory recording medium, storing position control program that causes a computer to execute:

processing of repeatedly acquiring position-related data related to a control object from a drive device that moves the control object, by using an encoder;

processing of acquiring measurement data obtained at a calculation time by measuring a positional relationship between the control object and a target position by image processing from an image captured at an imaging time before the calculation time, at an interval that is longer than an acquisition interval of the position-related data; position determining processing of determining an estimated position of the control object by using the position-related data and the measurement data; and

feedback control processing of outputting control data for aligning the control object at the target position by using the estimated position determined in the position determining process to the drive device,

**characterized by**, in the position determining processing,

the position-related data at the imaging time of the image used in the image processing is estimated, and the estimated position at the calculation time is determined by adding a difference between the position-related data at the calculation time and the position-related data at the imaging time to the measurement data.

**Patentansprüche**

1. Eine Steuervorrichtung (10), die Folgendes umfasst:

   eine Positionsbestimmungseinheit (12), die so konfiguriert ist, dass sie:

   wiederholtes Erfassen von positionsbezogenen Daten, die sich auf ein Steuerobjekt beziehen, von einer Antriebsvorrichtung, die so konfiguriert ist, dass sie das Steuerobjekt bewegt, unter Verwendung eines Codierers, Erfassen von Messdaten, die zu einem Berechnungszeitpunkt durch Messen einer Positionsbeziehung zwischen dem Steuerobjekt und einer Zielposition durch Bildverarbeitung von einem Bild, das zu einem Abbildungszeitpunkt vor dem Berechnungszeitpunkt erfasst wurde, in einem Zeitintervall, das länger als ein Erfassungsintervall der positionsbezogenen Daten ist, erhalten werden, und Bestimmen einer geschätzten Position des Steuerobjekts unter Verwendung der positionsbezogenen Daten und der Messdaten; und

   eine Rückkopplungssteuereinheit (11), die so konfiguriert ist, dass sie Daten zum Ausrichten des Steuerobjekts an der Zielposition auf die Antriebsvorrichtung unter Verwendung der von der Positionsbestimmungseinheit (12) bestimmten geschätzten Position steuert,

   **dadurch gekennzeichnet, dass** die Positionsbestimmungseinheit (12) so konfiguriert ist, um

   positionsbezogene Daten zum Abbildungszeitpunkt des in der Bildverarbeitung verwendeten Bildes zu schätzen und

   um die geschätzte Position zum Berechnungszeitpunkt zu bestimmen, indem eine Differenz zwischen den positionsbezogenen Daten zum Berechnungszeitpunkt und den positionsbezogenen Daten zum Abbildungszeitpunkt zu den Messdaten addiert wird.

2. Die Steuervorrichtung (10) nach Anspruch 1, wobei die Positionsbestimmungseinheit (12) so konfiguriert ist, dass sie die positionsbezogenen Daten zum Abbildungszeitpunkt unter Verwendung eines Interpolationswertes der positionsbezogenen Daten zu einer Vielzahl von Zeitpunkten nahe dem Abbildungszeitpunkt schätzt.

3. Die Steuervorrichtung (10) nach Anspruch 2, wobei die Positionsbestimmungseinheit (12) so konfiguriert ist, dass sie den Interpolationswert unter Verwendung einer Verzögerungszeit in Bezug auf die Abbildung und einer Verzögerungszeit in Bezug auf die Übertragung der positionsbezogenen Daten berechnet.

4. Die Steuereinrichtung (10) nach Anspruch 3,

   wobei die positionsbezogenen Daten in einem konstanten Zyklus erfasst werden, und die Positionsbestimmungseinheit (12) so konfiguriert ist, dass sie den Interpolationswert unter Verwendung des Zyklus berechnet.

5. Ein Positionsregelungssystem (1, 1A), das Folgendes umfasst:

   die Steuereinrichtung (10) nach einem der Ansprüche 1 bis 4; die Antriebsvorrichtung (20, 20A); und einen Bildsensor (40, 40A), der zur Durchführung der Bildverarbeitung konfiguriert ist.

**6.** Ein Verfahren zur Positionssteuerung, umfassend:

ein Verfahren (S12) zum wiederholten Erfassen von positionsbezogenen Daten, die sich auf ein Steuerobjekt beziehen, von einer Antriebsvorrichtung, die das Steuerobjekt bewegt, unter Verwendung eines Encoders; einen Prozess (S13) zum Erfassen von Messdaten, die zu einem Berechnungszeitpunkt durch Messen einer Positionsbeziehung zwischen dem Steuerobjekt und einer Zielposition durch Bildverarbeitung von einem Bild, das zu einem Abbildungszeitpunkt vor dem Berechnungszeitpunkt erfasst wurde, in einem Intervall erhalten werden, das länger als ein Erfassungsintervall der positionsbezogenen Daten ist; einen Positionsbestimmungsprozess (S16) zur Bestimmung einer geschätzten Position des Steuerobjekts unter Verwendung der positionsbezogenen Daten und der Messdaten; und einen Rückkopplungssteuerungsprozess (S18) zum Ausgeben von Steuerdaten zum Ausrichten des Steuerobjekts an der Zielposition unter Verwendung der geschätzten Position, die in dem Positionsbestimmungsprozess bestimmt wurde, an die Antriebsvorrichtung, **dadurch gekennzeichnet dass**, im Prozess der Positionsbestimmung (S16),

die positionsbezogenen Daten zum Abbildungszeitpunkt des in der Bildverarbeitung verwendeten Bildes geschätzt werden, und die geschätzte Position zum Berechnungszeitpunkt durch Addition einer Differenz zwischen den positionsbezogenen Daten zum Berechnungszeitpunkt und den positionsbezogenen Daten zum Abbildungszeitpunkt zu den Messdaten bestimmt wird.

**7.** Ein nicht-flüchtiges Aufzeichnungsmedium, das ein Positionssteuerungsprogramm speichert, das einen Computer zur Ausführung veranlasst:

Verarbeitung der wiederholten Erfassung von positionsbezogenen Daten, die sich auf ein Steuerobjekt beziehen, von einer Antriebsvorrichtung, die das Steuerobjekt bewegt, unter Verwendung eines Encoders; Verarbeitung des Erfassens von Messdaten, die zu einem Berechnungszeitpunkt durch Messen einer Positionsbeziehung zwischen dem Steuerobjekt und einer Zielposition durch Bildverarbeitung von einem Bild, das zu einem Abbildungszeitpunkt vor dem Berechnungszeitpunkt erfasst wurde, in einem Intervall, das länger als ein Erfassungsintervall der positionsbezogenen Daten ist, erhalten werden; Positionsbestimmungsverarbeitung zur Bestimmung einer geschätzten Position des Steuerobjekts unter Verwendung der positionsbezogenen Daten und der Messdaten; und Rückkopplungssteuerungsverarbeitung der Ausgabe von Steuerdaten zum Ausrichten des Steuerobjekts an der Zielposition unter Verwendung der geschätzten Position, die in dem Positionsbestimmungsprozess bestimmt wurde, an die Antriebsvorrichtung, **dadurch gekennzeichnet, dass**, in der positionsbestimmenden Verarbeitung,

die positionsbezogenen Daten zum Abbildungszeitpunkt des in der Bildverarbeitung verwendeten Bildes geschätzt werden, und die geschätzte Position zum Berechnungszeitpunkt durch Addition einer Differenz zwischen den positionsbezogenen Daten zum Berechnungszeitpunkt und den positionsbezogenen Daten zum Abbildungszeitpunkt zu den Messdaten bestimmt wird.

**Revendications**

**1.** Un dispositif de commande (10) comprenant
une unité de détermination de position (12) configurée pour :

l'acquisition répétée de données liées à la position concernant un objet de commande à partir d'un dispositif d'entraînement configuré pour déplacer l'objet de commande en utilisant un codeur, l'acquisition de données de mesure obtenues à un moment de calcul en mesurant une relation de position entre l'objet de commande et une position cible par traitement d'image à partir d'une image, obtenue à un moment d'imagerie avant le moment de calcul, à un intervalle de temps plus long qu'un intervalle d'acquisition des données liées à la position, et déterminer une position estimée de l'objet de commande en utilisant les données liées à la position et les données de mesure ; et une unité de commande à rétroaction (11) configurée pour commander des données pour aligner l'objet de commande à la position cible sur le dispositif d'entraînement en utilisant la position estimée déterminée par l'unité de détermination de position (12),
**caractérisé en ce que** l'unité de détermination de position (12) est configurée pour
d'estimer les données relatives à la position au moment de la prise de vue de l'image utilisée dans le traitement de l'image, et
pour déterminer la position estimée au moment du calcul, en ajoutant aux données de mesure une différence entre les données relatives à la position au moment du calcul et les données relatives à la position au moment de la cartographie.

2. le dispositif de commande (10) selon la revendication 1, dans lequel l'unité de détermination de position (12) est configurée pour estimer les données liées à la position au moment de la cartographie en utilisant une valeur d'interpolation des données liées à la position à une pluralité d'instants proches du moment de la cartographie.

3. Le dispositif de commande (10) selon la revendication 2, dans lequel l'unité de détermination de position (12) est configurée pour calculer la valeur d'interpolation en utilisant un temps de retard par rapport à l'imagerie et un temps de retard par rapport à la transmission des données liées à la position.

4. Le dispositif de commande (10) selon la revendication 3,

les données relatives à la position étant collectées selon un cycle constant, et
l'unité de détermination de position (12) est configurée pour calculer la valeur d'interpolation en utilisant le cycle.

5. Un système de commande de position (1, 1A) comprenant les éléments suivants :

le dispositif de commande (10) selon l'une quelconque des revendications 1 à 4 ;
le dispositif d'entraînement (20, 20A) ; et
un capteur d'image (40, 40A) configuré pour effectuer le traitement d'image.

6. Un procédé de commande de position comprenant :

un procédé (S12) pour acquérir de manière répétée des données liées à la position, relatives à un objet de commande, à partir d'un dispositif d'entraînement qui déplace l'objet de commande, en utilisant un codeur ;
un processus (S13) pour acquérir des données de mesure obtenues à un instant de calcul en mesurant une relation de position entre l'objet de commande et une position cible par traitement d'image à partir d'une image acquise à un instant d'imagerie avant l'instant de calcul, à un intervalle plus long qu'un intervalle d'acquisition des données liées à la position ;
un processus de détermination de position (S16) pour déterminer une position estimée de l'objet de commande en utilisant les données liées à la position et les données de mesure ; et
un processus de commande à rétroaction (S18) pour fournir en sortie des données de commande pour aligner l'objet de commande à la position cible en utilisant la position estimée déterminée dans le processus de détermination de position au dispositif d'entraînement, **caractérisé en ce que**,
dans le processus de détermination de la position (S16),

les données relatives à la position sont estimées au moment de la prise de vue de l'image utilisée dans le traitement de l'image, et
la position estimée au moment du calcul est déterminée en ajoutant aux données de mesure une différence entre les données relatives à la position au moment du calcul et les données relatives à la position au moment de la cartographie.

7. Un support d'enregistrement non volatil qui stocke un programme de commande de position qui provoque l'exécution d'un ordinateur :

Traitement de l'acquisition répétée de données liées à la position, concernant un objet de commande, à partir d'un dispositif d'entraînement qui déplace l'objet de commande, en utilisant un codeur ;
le traitement de l'acquisition de données de mesure obtenues à un instant de calcul en mesurant une relation de position entre l'objet de commande et une position cible par traitement d'image à partir d'une image acquise à un instant d'imagerie avant l'instant de calcul, à un intervalle plus long qu'un intervalle d'acquisition des données liées à la position ;
traitement de détermination de position pour déterminer une position estimée de l'objet de commande en utilisant les données liées à la position et les données de mesure ; et

traitement de commande de rétroaction de la sortie de données de commande pour aligner l'objet de commande à la position cible en utilisant la position estimée déterminée dans le processus de détermination de position, vers le dispositif d'entraînement,

**caractérisé en ce que** , dans le traitement déterminant la position,

les données relatives à la position sont estimées au moment de la prise de vue de l'image utilisée dans le traitement de l'image, et

la position estimée au moment du calcul est déterminée en ajoutant aux données de mesure une différence entre les données relatives à la position au moment du calcul et les données relatives à la position au moment de la cartographie.

FIG. 1

FIG. 2(A)

FIG. 2(B)

EP 3 416 007 B1

```
        ┌──────────────┐
        │    START     │
        └──────┬───────┘
               │        S11
        ┌──────▼───────┐
        │INITIALIZATION│
        └──────┬───────┘
               │        S12
        ┌──────▼───────┐
        │INPUT ENCODER │
        │    VALUE     │
        └──────┬───────┘
               │        S13
          ╱────▼────╲
         ╱ COMPLETE  ╲      NO
        ╱MEASUREMENT BY╲─────────────┐
        ╲ IMAGE SENSOR ╱             │
         ╲────┬────╱                 │
              │ YES                  │
          ╱───▼────╲      NO         │
         ╱          ╲────────────────┼──────┐
         ╲NORMAL VALUE╱   S14         │      │
          ╲───┬────╱                 │      │
              │ YES                  │      │
              │       S15       ╱────▼────╲  │
        ┌─────▼──────┐         ╱    HAS    ╲  S20   NO
        │INPUT       │        ╱ MEASUREMENT ╲───────┐
        │MEASUREMENT │        ╲POSITION BEEN OUTPUT╱ │
        │  POSITION  │         ╲ONCE OR MORE?╱       │
        └─────┬──────┘          ╲───┬────╱          │
              │       S16           │ YES           │
        ┌─────▼──────┐              │      S21       │
        │ESTIMATE    │        ┌─────▼──────┐         │
        │ENCODER VALUE│       │CALCULATE   │         │
        │AT TIME OF  │        │ESTIMATION  │         │
        │  IMAGING   │        │INTERPOLATION│        │
        └─────┬──────┘        │ POSITION   │         │
              │       S17     └─────┬──────┘         │
        ┌─────▼──────┐              │                │
        │CALCULATE   │              │                │
        │ESTIMATION  │              │                │
        │INTERPOLATION│             │                │
        │ POSITION   │              │                │
        └─────┬──────┘              │                │
              │◄─────────────────────────────────────┘
              │       S18
        ┌─────▼──────┐
        │OUTPUT      │
        │ESTIMATION  │
        │INTERPOLATION│
        │ POSITION   │
        └─────┬──────┘
              │       S19
     NO   ╱───▼────╲
    ┌─────╲END CONTROL╱
    │      ╲───┬────╱
    │          │ YES
    │    ┌─────▼──────┐
    │    │    END     │
    │    └────────────┘
```

# FIG. 3

FIG. 4(A)

FIG. 4(B)

START

S61

ACQUIRE IMAGING CLOCK
TIME

S62

ACQUIRE ENCODER VALUES
NEAR IMAGING CLOCK TIME

S63

PERFORM INTERPOLATION
USING ENCODER VALUES

END

# FIG. 5

IMAGE SENSOR

Tsd

tvi

IMAGE PROCESSING
(POSITION MEASUREMENT)

PVv(n)

TRp

Tc

CONTROLLER

t(n−k)    t(n−k+1)    t(n−k+2)    t(n−k+3)                    tn

Ted        Ted        Ted        Ted                    Ted

DRIVER

PVm(n−k)          PVm(n−k+2)                    PVm(n)

PVm(n−k+1)        PVm(n−k+3)

PVms(ni)

# FIG. 6

──── : ESTIMATION INTERPOLATION IS PERFORMED
▬ ▬ ▬ ▬ : ESTIMATION INTERPOLATION IS NOT PERFORMED

FIG. 7(A)

(ESTIMATION INTERPOLATION IS NOT PERFORMED)

FIG. 7(B)

(ESTIMATION INTERPOLATION IS PERFORMED)

──── : MEASUREMENT DISTANCE
▬ ▬ ▬ ▬ : ESTIMATIOIN INTERPOLATION DISTANCE

FIG. 7(C)

18

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015213139 A
- US 5946449 A
- US 2016318187 A1